# FASCICULE DE BREVET EUROPEEN

(11) **EP 2 697 024 B1**
(45) Date de publication et mention de la délivrance du brevet: **06.05.2015**
(21) Numéro de dépôt: 12717354.0
(22) Date de dépôt: 22.03.2012
(51) Int. Cl.: B29B 11/08, B29B 11/14, B29C 49/06, B29C 49/78, B29K 105/00, B65D 1/02

(54) **PERFECTIONNEMENT AU FOND DE PREFORMES**
VERBESSERUNG DES BODENS VON VORFORMEN
IMPROVEMENT OF THE BOTTOM OF PREFORMS

(30) Priorité: 13.04.2011 FR 1153209
(43) Date de publication de la demande: 19.02.2014
(73) Titulaire: Sidel Participations, 76930 Octeville sur Mer (FR)
(72) Inventeur: BUNEL, Christophe, 76930 Octeville-sur-Mer (FR); BOUKOBZA, Michel, 76930 Octeville-sur-Mer (FR)
(74) Mandataire: Cabinet Plasseraud
(86) Numéro de dépôt international: PCT/FR2012/050596
(87) Numéro de publication internationale: WO 2012/140343

(56) Documents cités:
- EP-A2- 0 322 651
- WO-A1-97/32711
- JP-A- 9 001 639
- US-A- 5 853 829
- US-A1- 2010 055 369

## Description

La présente invention concerne les préformes en matériau thermoplastique utilisées pour la fabrication de bouteilles ; elle concerne, plus particulièrement, un perfectionnement au fond de ces préformes. De telles préformes sont décrites dans les documents US 5853829, EP-A-0322 651, US 2010/055369, JP9001639 et WO97/32711].

De façon classique, le fond de la préforme présente un aspect hémisphérique et la partie centrale externe de cette hémisphère correspond au point d'injection de la matière lors de la fabrication de ladite préforme.

La partie centrale interne de l'hémisphère, quant à elle, est l'endroit qui accueille l'extrémité de la tige d'élongation qui est utilisée pour réaliser l'étirage de la préforme dans le moule lors de l'opération d'étirage-soufflage, et c'est autour de cette partie centrale que s'effectue l'expansion du matériau thermoplastique, bi-axialement, de sorte que le centre de la partie centrale hémisphérique de la préforme correspond au centre de la partie centrale du fond de la bouteille moulée.

Il y a, autour de cette partie centrale du fond de la bouteille moulée, une zone qui est fragile et qui est une source de défauts, notamment pour des bouteilles de moyennes et grandes capacités, typiquement de 1 à 5 litres. Le fond de la bouteille est en effet le siège de phénomènes de craquelures et on peut observer des ruptures entre la partie centrale où la matière est amorphe et la périphérie de cette partie qui correspond à son assise, là où la matière est expansée de façon bi-axiale.

Ces défauts sont encore plus sensibles lorsqu'il s'agit de bouteilles dont le fond est relativement complexe comme c'est le cas pour les bouteilles à fond pétaloïde.

La présente invention propose un aménagement du fond de la préforme en tenant compte de données qui sont attachées à la fois à la définition du modèle de bouteille que l'on souhaite obtenir et à la définition de cette préforme, lequel aménagement permet d'obtenir, après l'opération d'étirage-soufflage de ladite préforme, une zone de transition sur le fond de la bouteille moulée qui est moins sujette à des phénomènes de craquelures entre la partie centrale dudit fond de cette bouteille et la partie qui constitue son assise.

Cette préforme comprend, centrés sur un même axe xx' : - un col, - un corps cylindrique et - un fond fermé de forme sphéroïdale, laquelle préforme se définit par rapport aux dimensions d'un modèle préétabli de bouteille qui comprend : un fond, un corps, et un col, ledit col dudit modèle de bouteille étant identique au col de ladite préforme,
lequel corps cylindrique de cette préforme est déterminé par : - son diamètre Ae extérieur, - son diamètre Am moyen pris au niveau de la fibre neutre de la paroi dudit corps cylindrique, et - son diamètre K intérieur, et,
ledit corps cylindrique ainsi que ledit fond sphéroïdal de ladite préforme sont déterminés par des demi-longueurs qui se lisent sur la fibre neutre de leur paroi : - une demi-longueur L3 qui s'étend depuis la jonction entre ledit col et ledit corps cylindrique jusqu'au niveau du centre dudit fond de ladite préforme et en particulier le point On dudit fond qui est situé à l'intersection de ladite fibre neutre et dudit axe xx', et - une demi-longueur L4 qui s'étend dudit centre On jusqu'à un point NP qui se situe au niveau de la jonction entre ledit corps cylindrique et ledit fond de ladite préforme,
lequel diamètre Am est déterminé en appliquant, à la valeur du diamètre Ab maxi du corps dudit modèle préétabli de bouteille, un taux de réduction choisi parmi des valeurs qui vont de 3,7 à 4,5 du fait de la bi-orientation ;
laquelle demi-longueur L3 est déterminée à partir de la demi-longueur L1 dudit modèle de bouteille en appliquant à la valeur de cette demi-longueur L1 un taux de réduction lié également à la bi-orientation, qui est choisi parmi des valeurs allant de 2,8 à 3,5 et,
laquelle demi-longueur L4 correspond à la demi-longueur L3 multipliée par deux fois la valeur du rapport entre la demi-longueur L2 dudit modèle de bouteille et la demi-longueur L1 de son assise, en d'autres termes cette valeur de L4 = 2x(L3)x(L2/L1), et laquelle demi-longueur L2 de l'assise correspond au rayon moyen de l'assise du fond de ladite bouteille,
et, partant de la position du point NP, qui est déterminée grâce à L4:
- le contour externe de ladite préforme entre le point NP et le point OP central externe du fond de ladite préforme, disposé sur l'axe xx', se définit à partir de ce point OP, lequel point OP se situe à une distance du point On qui correspond à la moitié de l'épaisseur C dudit fond de la préforme et dont la valeur, détaillée plus loin, est en relation avec l'épaisseur B de la paroi du corps cylindrique, prise du côté de son col,
   lequel contour externe de ladite préforme se définit de la façon suivante :
   - partant dudit point OP central, ledit contour extérieur se présente sous la forme d'une calotte sphérique qui est générée par un arc de cercle dont le centre P se situe sur l'axe xx' à une distance dudit point OP central qui correspond à un rayon RE dont la valeur, détaillée ci-après, est en relation avec le diamètre Ae externe de ladite préforme, et,
   - partant du point NP, ledit contour externe est délimité par une surface tronconique qui commence au niveau dudit point NP et qui s'étend vers ladite calotte sphérique, et dont le sommet se situe sur ledit axe xx', au-delà dudit point OP central à l'extérieur dudit fond de ladite préforme, laquelle surface tronconique fait un demi-angle M au sommet qui est choisi pour permettre à ladite surface tronconique d'être sécante avec ladite calotte sphérique générée par l'arc de cercle de rayon RE et,
      toujours pour ce contour externe de ladite préforme, la jonction entre ladite calotte sphérique de rayon RE et ladite surface tronconique est constituée d'un anneau torique généré par un arc de cercle de rayon RG, et la surface dudit anneau torique est tangente à ladite calotte sphérique et à ladite surface tronconique, et ledit rayon RG, détaillé ci-après, est en relation avec le diamètre Ae extérieur de ladite préforme, et,
- le contour interne dudit fond de ladite préforme s'étend à partir de l'extrémité de l'enveloppe de la cavité interne pseudo-cylindrique du corps de ladite préforme jusqu'au point central S situé sur l'axe xx', lequel point central S est positionné à une distance C dudit point OP central mesurée sur ledit axe xx', dont la valeur, détaillée ci-après, est en relation avec l'épaisseur B de la paroi dudit corps de ladite préforme, lequel contour interne dudit fond se définit de la façon suivante :
   - partant dudit point S, ledit contour interne est généré par un arc de cercle de rayon RH dont le centre, positionné sur ledit axe xx', se situe au-delà du fond, à l'extérieur de ladite préforme, de façon à former une partie centrale bombée en forme de dôme sphérique, lequel rayon RH, détaillé plus loin, est en relation avec le diamètre Ae extérieur de la préforme, et,
   - partant d'un point T qui se situe à l'extrémité de l'enveloppe de ladite cavité interne pseudo-cylindrique du corps de ladite préforme, et dont la position est définie ci-après, ledit contour interne comprend une surface sphérique générée par un arc de cercle de rayon RK dont la longueur est égale au demi-diamètre K intérieur de ladite préforme et le centre V de cet arc de cercle de rayon RK est disposé sur l'axe xx' ; ledit point T se situe au même niveau que ledit centre V, c'est-à-dire que sa projection sur l'axe xx' coïncide avec le centre V, et la distance Z entre ce centre V et le point OP du fond de ladite préforme correspond à 1/2K+(C-D), c'est-à-dire au demi-diamètre K intérieur de ladite préforme, augmenté de l'épaisseur C dudit fond de cette préforme, mesurée sur l'axe xx', et diminué d'une épaisseur D qui correspond à la différence entre le rayon RK et la distance qui sépare le centre V de l'arc de rayon RK par rapport au point S central, laquelle valeur de D est définie plus loin en fonction de l'épaisseur B de la paroi du corps cylindrique de ladite préforme, et,
toujours pour ce contour intérieur dudit fond de ladite préforme, la jonction entre, d'une part, ledit dôme sphérique de rayon RH et, d'autre part, ladite surface sphérique engendrée par l'arc de cercle de rayon RK, est constituée d'une surface annulaire torique engendrée par un arc de cercle de rayon RL qui se situe dans un plan générateur passant par l'axe xx' et dont le centre Y est situé entre ledit point S central et ledit point V, dans un plan perpendiculaire audit axe xx', lequel centre Y est disposé sur un cercle centré sur ledit axe xx' et dont le rayon RI a une valeur détaillée ci-après en fonction du diamètre Ae extérieur de ladite préforme, et,
tant pour le contour interne que pour le contour externe dudit fond de ladite préforme, les valeurs de RE, M, RG, RH, RK, RL, D, RI, et C sont déterminées de la façon suivante :
- pour RE : 0,5.Ae < RE < 0,7.Ae,
- pour M : 5° < M < 20°,
- pour RG : 0,25.Ae < RG < 0,5.Ae,
- pour RH : 0,7.Ae < RH < 1,3.Ae,
- pour RK : RK = ½K,
- pour RL : 0,6.RK < RL < RK,
- pour D : 0,2.C < D < 0,6.C,
- et pour RI : 0,05.Ae < RI < 0,1.Ae,
où :
- Ae est le diamètre externe du corps de ladite préforme ;
- B correspond à l'épaisseur de la paroi du corps de ladite préforme au début de sa partie cylindrique ;
- C correspond à l'épaisseur de la paroi de ladite préforme au niveau de son fond, sur son axe xx' avec, pour C : B < C < 1,1x(B) ;
- K est le diamètre interne de la cavité pseudo-cylindrique du corps cylindrique, au niveau du fond de ladite préforme.

Toujours selon l'invention, pour le contour externe du fond de la préforme, la jonction entre l'enveloppe du corps cylindrique externe et l'enveloppe de la surface tronconique, au niveau du point N, se présente sous la forme d'un arrondi dont le rayon RF correspond à 1/2x(Ae) et peut être du même ordre que le rayon RE de la calotte sphérique qui constitue le contour externe dudit fond, lequel arrondi circulaire est tel qu'il tangente ladite enveloppe cylindrique externe et ledit tronçon tronconique et constitue un adoucissement de l'arête au niveau dudit point N de jonction.

Selon une disposition préférentielle de l'invention, le rayon RE de la calotte sphérique du contour extérieur de la préforme est de l'ordre de 0,53x(Ae).

Selon une autre disposition préférentielle de l'invention, le demi-angle M de la partie tronconique du contour extérieur est de l'ordre de 10°.

Selon une autre disposition préférentielle de l'invention, le rayon RG de la zone torique du contour extérieur de la préforme, qui s'étend entre la surface sphérique et l'enveloppe tronconique, est de l'ordre de 0,32x(Ae).

Selon une autre disposition préférentielle de l'invention, le rayon RH de la petite calotte sphérique centrale du contour interne de la préforme est sensiblement égal à 1/2x(Ae), c'est-à-dire à la moitié du diamètre Ae extérieur de son corps cylindrique.

Selon une autre disposition préférentielle de l'invention, le rayon RL de la zone torique du contour interne de la préforme, qui fait la jonction entre, d'une part, la zone sphérique qui commence à partir de l'extrémité inférieure de l'enveloppe cylindrique interne et, d'autre part, la petite calotte sphérique centrale, est de l'ordre de 0,8x(K/2).

Selon une autre disposition préférentielle de l'invention, le rayon RI du cercle sur lequel se déplace le centre de l'arc de cercle générateur de la zone torique, qui fait la jonction entre la zone sphérique qui commence à partir de l'extrémité inférieure de l'enveloppe cylindrique interne et la calotte sphérique centrale, lequel rayon RI a une valeur qui est de l'ordre de 0,07x(Ae).

Selon une autre disposition préférentielle de l'invention, l'épaisseur D de construction de la paroi du fond de la préforme, sur son axe xx', est de l'ordre de 0,41x(C).

Selon une autre disposition préférentielle de l'invention, l'épaisseur C de la préforme sur son axe xx', est de l'ordre de 1,02x(B).

Pour pouvoir être exécutée, l'invention est exposée de façon suffisamment claire et complète dans la description suivante qui, en plus, est accompagnée de dessins dans lesquels :
- la figure 1 représente un modèle de bouteille qui peut être obtenu avec la préforme selon l'invention par une opération d'étirage-soufflage ;
- la figure 2 représente ce que l'on appelle la demi-longueur L1 de la bouteille et la demi-longueur L2 de l'assise de ladite bouteille ;
- la figure 3 représente une préforme qui est proportionnée par rapport au modèle de bouteille représenté figure 1 ;
- la figure 4 est une préforme agrandie pour montrer ce que l'on appelle la demi-longueur L3 de la préforme et la demi-longueur L4 du fond de ladite préforme ;
- la figure 5 est un agrandissement du fond de la préforme pour montrer le détail de son contour interne et de son contour externe ainsi que le détail de la construction des courbes qui génèrent ces contours.

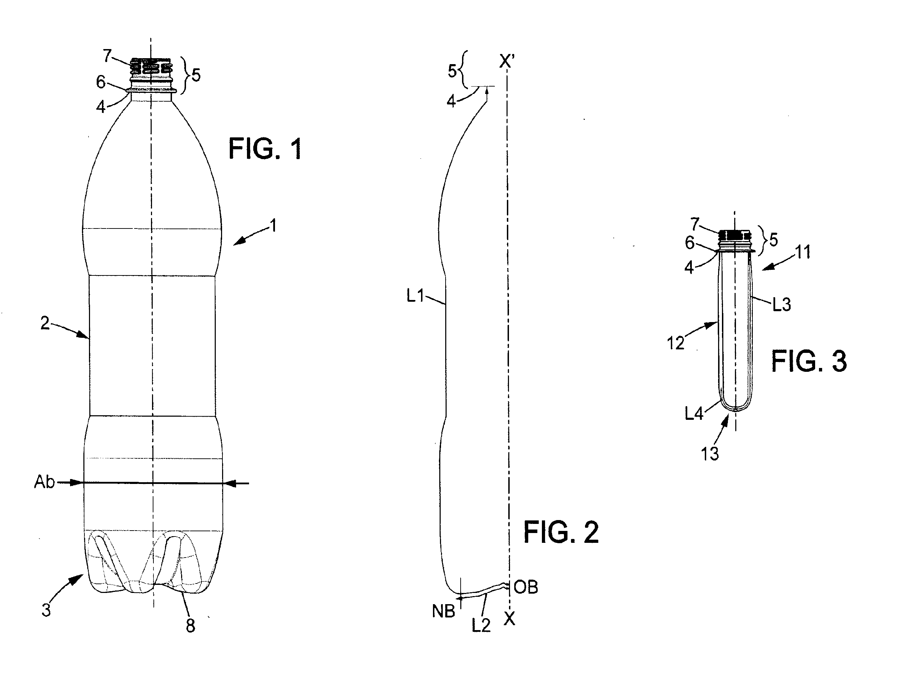

Le modèle de bouteille 1, représenté figure 1, comporte un corps 2 allongé qui s'étend entre un fond 3 et sa jonction 4 avec un col 5. Le fond 3 qui est représenté est un fond relativement complexe, du type pétaloïde. Le col 5 de la bouteille, qui correspond à celui de la préforme qui sert à sa fabrication, comporte, de façon classique, dans l'exemple illustré, immédiatement au dessus de sa jonction 4 avec le corps 2 une collerette 6 ; ce col 5 est aménagé, avec des moyens 7, ici un filetage, pour accueillir des moyens de bouchage, non représentés, du type bouchon vissé. La collerette 6 sert à assurer le transport et/ou le maintien du récipient 1, ou de la préforme qui sert à sa fabrication, lors de certaines étapes de fabrication ou de conditionnement. Toutefois, pour certaines applications, on peut envisager des récipients, et donc des préformes, sans collerette et le transport et/ou le maintien sont assurés d'autres manières, le col ayant alors pour fonction première d'assurer la réception des moyens de bouchage. Le fond 3 comprend une assise 8 constituée de plusieurs points ou zones d'appui.

Lors de l'élaboration du modèle de bouteille 1, on définit plusieurs dimensions : on définit son diamètre Ab maximum au niveau du corps 2, lequel diamètre Ab maximum se situe généralement dans la partie basse du corps 2, au-dessus du fond 3 ; on définit aussi, toujours pour cette bouteille 1, une dimension dénommée demi-longueur L1, comme représentées figure 2, et une dimension dénommée demi-longueur L2, mesurée au niveau de l'assise 8. Ces demi-longueurs L1 et L2 sont prises (mesurées) sur la fibre neutre de la paroi du modèle de bouteille 1.

La demi- longueur L1 s'étend entre le centre OB du fond et la jonction 4 entre le col 5 et le corps 2 du modèle de bouteille 1. La dimension L2 au niveau de l'assise 8 s'étend entre le centre OB du fond du modèle de la bouteille 1 et le point NB qui correspond au point médian de la zone de l'assise 8 de ladite bouteille 1 ; autrement dit, la demi-longueur L2 correspond au rayon moyen de la zone d'appui du fond 3 pétaloïde.

Ces demi-longueurs L1 et L2 du modèle de bouteille 1 sont utilisées pour délimiter le contour de la préforme 11, figure 3, qui va donner naissance à ladite bouteille 1 par une opération classique d'étirage-soufflage.

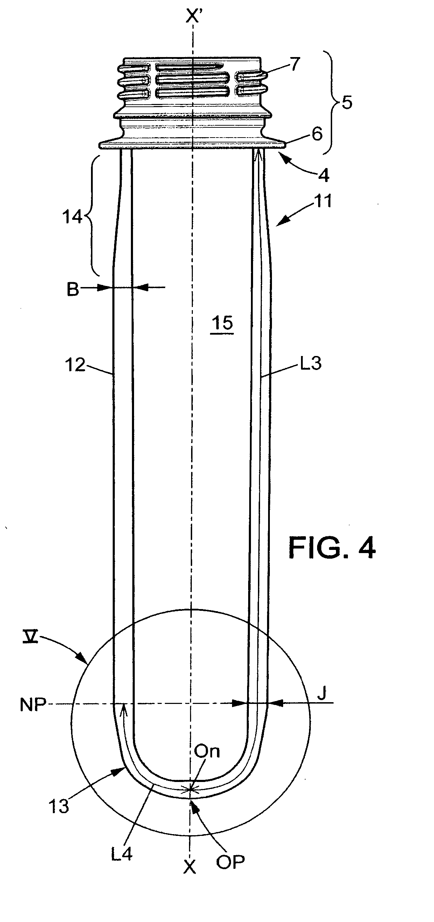

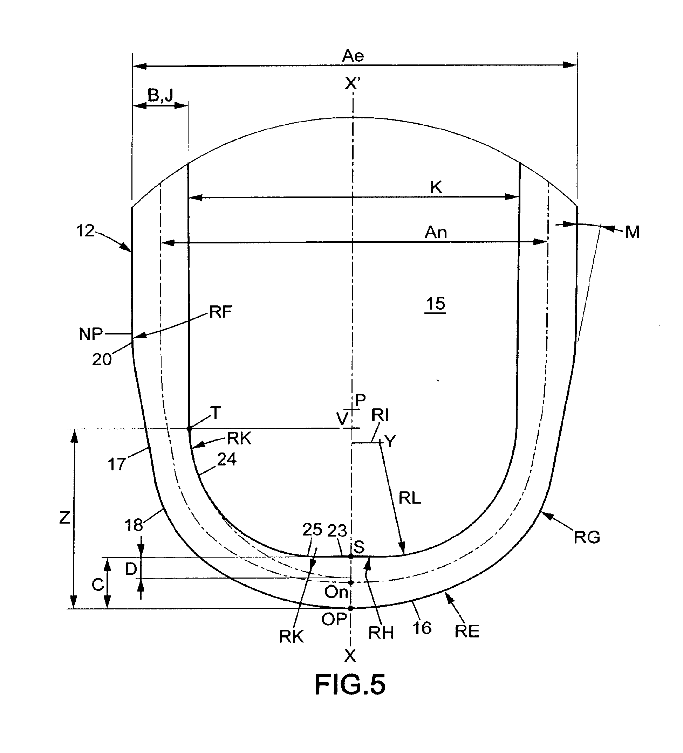

Cette préforme 11 est représentée figure 3 de façon proportionnée par rapport au modèle de bouteille 1 de la figure 1, et elle est, en plus, représentée figures 4 et 5 à une plus grande échelle pour montrer les détails de ses contours internes et externes.

Comme représentée figure 3, la préforme 11 est constituée : - d'un corps 12 de forme cylindrique, - d'un fond 13 dont l'allure générale est du type sphéroïdale,-d'un col 5 pourvu dans l'exemple, juste au-dessus de sa jonction 4 avec le corps 12 d'une collerette 6, lequel col 5 est identique à celui du modèle de la bouteille 1 représenté figure 1. En fait le col 5, c'est-à-dire la partie constituée des moyens 7 prévus pour recevoir un bouchon et de la collerette 6 lorsqu'elle est présente, n'est pas modifié pendant les étapes de formation du récipient. Ce sont uniquement les parties de la préforme 11 situées au dessous de la jonction 4 du col 5 avec le corps 12 qui sont modifiées.

Selon les capacités et les formes de la bouteille 1 à obtenir, on peut aussi trouver une zone 14 de forme tronconique qui s'étend entre le corps 12 cylindrique et la jonction 4 avec le col 5 ; dans cette zone 14 tronconique, l'épaisseur de la paroi de la préforme 11 varie entre ladite jonction 4 et ledit corps 12 cylindrique ; elle est croissante de la jonction 4 vers le corps 12 pour le mode de réalisation représenté figure 4.

Compte tenu de la contre-dépouille nécessaire pour le démoulage de la préforme 11, la cavité 15 interne de cette préforme 11 est plutôt pseudo-cylindrique ; l'épaisseur de la paroi du corps 12 varie et, pour la définition dimensionnelle de la préforme par rapport au modèle de bouteille 1, deux valeurs de cette épaisseur sont utilisées : - l'épaisseur B de la paroi au début de la partie cylindrique du corps 12 et - l'épaisseur J au niveau du début du contour interne du fond 13 de la préforme 11. Cette épaisseur J est définie de la façon suivante, par rapport à B : 0,9x(B) < J < 1,2x(B), avec, de préférence, J = 1,05x(B). L'épaisseur B, quant à elle, est définie en tenant compte des dimensions et du poids souhaités de la bouteille 1, lequel poids correspond à celui de la préforme 11.

Comme pour le modèle de la bouteille 1, la préforme 11 se définit aussi avec des dimensions prises au niveau de la fibre neutre de sa paroi. Ainsi, comme représentées figure 4, on trouve la demi-longueur L3 et la demi-longueur L4 ; la demi-longueur L3 s'étend de la jonction 4 entre le col 5 et le corps 2 jusqu'au centre On du fond 13, lequel centre On se situe à l'intersection de l'axe xx' et de la fibre neutre de la paroi de la préforme 11, au niveau du fond 13. La demi-longueur L4 correspond à la fibre neutre qui s'étend de On jusqu'à un point NP. Ce point NP se situe à la fin de la paroi cylindrique du corps 12 de cette préforme 11 ; il se situe en fait dans une zone qui, après l'opération d'étirage-soufflage donnant la bouteille, va correspondre à la zone de l'assise 8 de ladite bouteille 1 et en particulier correspondre à la zone qui est notée NB sur la figure 2.

Les dimensions de la préforme 11 sont en rapport avec les dimensions du modèle de bouteille 1. Pour obtenir la préforme 11, on applique aux dimensions du modèle de bouteille 1, un taux de réduction choisi parmi une plage de valeurs qui tient compte de la capacité (volume) de la bouteille 1 et qui tient compte aussi de la forme de la préforme 11 qui va permettre l'obtention de ladite bouteille 1.

En effet, le dessin d'une préforme 11 doit tenir compte de certaines contraintes qui sont notamment liées à la manipulation de ces préformes entre le moment où elles sont fabriquées et le moment où elles sont installées sur un convoyeur pour entrer dans l'installation de chauffage et ensuite dans la machine d'étirage-soufflage.

Le dessin des préformes 11 doit permettre de limiter, et mieux encore, d'éviter les incidents du genre emboîtement des préformes les unes dans les autres, lesquels incidents surviennent, par exemple, lors de leur stockage et surtout lors de leur manipulation pour les trier et les transférer de leur zone de stockage vers le convoyeur qui est aménagé pour les introduire dans l'installation de chauffage.

Ainsi, le diamètre Ae extérieur de la préforme 11, mesuré au niveau du corps 12 cylindrique, est proportionnel au diamètre Ab du corps 2 du modèle de bouteille 1, lequel diamètre Ae est déterminé en appliquant un taux de réduction choisi parmi des valeurs qui vont de 3,7 à 4,5, c'est-à-dire que l'on a : 3,7x(Ae) < Ab < 4,5x(Ae).

Les valeurs des demi-longueurs L3 et L4 de la préforme 11 sont en rapport avec celles des demi-longueurs L1 et L2 du modèle de la bouteille 1. Ainsi, la demi-longueur L3 de la préforme 11 est déterminée en appliquant un taux de réduction qui est choisi dans une plage de valeurs allant de 2,8 à 3,5. La valeur de cette demi-longueur L1 est définie de la façon suivante : 2,8x(L3) < L1 < 3,5x(L3).

De plus, pour obtenir une bonne définition de la préforme 11, le rapport LP des demi-longueurs de ladite préforme 11 est, de préférence, égal à deux fois le rapport LB des demi-longueurs du modèle de bouteille 1. Ainsi, LP = L4/L3 = 2x(LB), avec LB = L2/L1.

Le fond 13 de la préforme 11 est dessiné, figure 4, avec la demi-longueur L4 qui s'étend depuis le point On jusqu'au point NP. Ce point NP correspond, comme indiqué précédemment, au point Nb de l'assise 8 de la bouteille 1, figure 2. La demi-longueur L4 permet donc de tracer, sur la préforme 11, la position du point NP ; ce point NP, sur la préforme 11, se situe au niveau de la zone de raccordement entre le corps 12 cylindrique et le fond 13 de ladite préforme 11.

La valeur de cette demi-longueur L4 est déterminée, comme indiqué précédemment, à partir des demi-longueurs L1 et L2 du modèle de bouteille 1 et à partir de la demi-longueur L3 préalablement déterminée de la préforme 11 : L4 = (L3)x2(L2/L1). Cette demi-longueur L4 correspond, sur la fibre neutre de la paroi de ce fond 13 de la préforme, à la demi-longueur L3 multipliée par deux fois le rapport entre la demi-longueur L2 et la demi-longueur L1 du modèle de bouteille 1.

Le contour géométrique externe du fond 13 de la préforme 11, détaillé figure 5 de façon agrandie, s'étend entre le point OP qui se situe à l'extérieur de la préforme 11, au centre du fond 13, sur l'axe xx' de ladite préforme 11, et le point NP. Ce contour géométrique externe dudit fond 13 comprend une calotte 16 torique externe et une surface 17 de forme tronconique.

La calotte 16 sphérique externe est générée par un arc de cercle dont le centre P se situe sur l'axe xx' de la préforme, à une distance du point OP qui est égale au rayon RE, lequel rayon RE est déterminé à partir du diamètre externe Ae de la préforme 11 ; il se définit de la façon suivante : 0,5x(Ae) < RE < 0,7x(Ae) et, de préférence, ce rayon RE est de l'ordre de 0,53x(Ae).

Toujours pour cette enveloppe externe du fond 13, en partant du point N, le contour extérieur comprend la surface 17 tronconique qui s'étend vers la calotte 16 sphérique externe, laquelle surface 17 tronconique a un sommet qui se situe sur l'axe xx' de la préforme 11, au-delà du point OP, c'est-à-dire à l'extérieur de ladite préforme 11. Cette surface 17 tronconique fait un demi-angle M au sommet qui est choisi pour faire en sorte que l'enveloppe de ladite surface 17 tronconique soit sécante avec l'enveloppe de la calotte 16 sphérique externe qui est générée par l'arc de cercle de rayon RE.

La jonction entre la calotte 16 sphérique externe et la surface 17 tronconique est constituée d'un anneau 18 torique qui est généré par un arc de cercle de rayon RG; lequel arc de cercle de rayon RG est tel que cet anneau 18 torique est tangent au rayon générateur de ladite calotte 16 sphérique et à la génératrice de ladite surface 17 tronconique de sorte que la surface de cet anneau 18 torique est tangente à ladite surface 16 sphérique externe et à ladite surface 17 tronconique.

Ce rayon RG est lui aussi délimité par rapport au diamètre Ae externe de la préforme 11 selon la relation suivante: 0,25x(Ae) < RG < 0,5x(Ae). De préférence, ce rayon RG de l'anneau 18 torique du contour extérieur est de l'ordre de 0,32x(Ae).

Le demi-angle M au sommet, de l'enveloppe 17 tronconique du contour extérieur est, par exemple, compris entre 5° et 20° ; de préférence, ce demi-angle M au sommet est de l'ordre de 10°.

Toujours pour ce contour extérieur du fond 13 de la préforme 11, la jonction entre l'enveloppe externe du corps 12 cylindrique et l'enveloppe de la surface 17 tronconique, au niveau du point NP, se présente sous la forme d'un arrondi 20 dont le rayon RF correspond au rayon dudit corps 12 cylindrique, c'est-à-dire à la moitié du diamètre Ae de ladite préforme 11, lequel rayon RF peut également correspondre au rayon RE de la calotte 16 sphérique qui constitue le contour externe extrême du fond 13 de la préforme 11.

Cet arrondi 20 circulaire constitue en fait un simple adoucissement de l'éventuelle arête qui se situe au niveau de la zone marquée par le point NP où se fait la jonction entre l'enveloppe externe du corps 12 cylindrique de la préforme 11 et l'enveloppe de la surface 17 tronconique du fond 13.

La définition du contour interne du fond 13 de la préforme 11 commence à l'extrémité de la cavité 15 pseudo-cylindrique, du côté dudit fond 13, jusqu'à un point central S qui se situe sur l'axe xx', à une distance C du point OP, laquelle distance, mesurée sur l'axe xx', sera détaillée plus loin dans la description.

A partir de ce point S, le contour interne du fond 13 de la préforme 11 présente une partie centrale bombée en forme de dôme 23 sphérique qui est centrée sur l'axe xx' ; ce dôme 23 sphérique interne a un rayon RH qui est centré sur l'axe xx' en un point qui est du côté de l'extérieur de la préforme 11. Ce rayon RH est défini par rapport au diamètre Ae externe de la préforme 11 selon la relation 0,7x(Ae) < RH < 1,3x(Ae). De préférence, le rayon RH du dôme 23 sphérique est du même ordre que la moitié du diamètre Ae extérieur du corps 12 de la préforme 11.

Ce contour interne du fond 13 de la préforme 11 comporte, entre l'enveloppe de la cavité 15 interne et le dôme 23, une portion de surface 24 sphérique qui est générée par un arc de cercle de rayon RK, lequel rayon RK est égal au demi-diamètre K intérieur de ladite préforme 11. Le centre V de cet arc de cercle de rayon RK est disposé sur l'axe xx' de la préforme 11, et le raccordement entre la portion de surface 24 sphérique et l'enveloppe de la cavité 15 interne est marqué par un point T, la projection du point T sur l'axe xx' coïncide avec le centre V, et la distance Z entre ce centre V et le point OP du fond 13 de ladite préforme 11 est déterminée en fonction de K, de l'épaisseur C de ce fond 13 et d'une côte D dont la valeur est détaillée plus loin.

Ainsi, Z = K/2-C+D, c'est-à-dire que la distance Z correspond au demi-diamètre K intérieur de la préforme 11, mesuré au niveau du point T, augmenté de l'épaisseur C du fond de cette préforme, mesurée sur l'axe xx', et diminué d'une côte D qui est dénommée épaisseur de construction, laquelle côte D est mesurée sur l'axe xx' en partant du point central S.

La valeur de cette côte D est établie en fonction de l'épaisseur C du fond 13 de la préforme 11. Cette côte D a une valeur qui est déterminée par la relation suivante : 0,2x(C) < D < 0,6x(C) ; de préférence, cette côte D est de l'ordre de 0,41x(C).

L'épaisseur C du fond 13 de la préforme 11, mesurée sur l'axe xx', est établie en fonction de l'épaisseur B de la préforme 11 prise au début de la partie cylindrique du corps 12. Cette épaisseur C est déterminée par la relation B < C < 1,1x(B) ; de préférence, cette épaisseur C est de l'ordre de 1,02x(B).

L'épaisseur B, quant à elle, est définie en tenant compte des dimensions et du poids souhaités de la bouteille 1, lequel poids correspond à celui de la préforme 11.

La jonction entre d'une part, le dôme 23 sphérique de rayon RH et, d'autre part, la portion de surface 24 sphérique engendrée par l'arc de cercle de rayon RK, est constituée d'une surface 25 annulaire du genre torique, laquelle surface 25 annulaire est engendrée par un arc de cercle de rayon RL qui se situe dans un plan générateur tournant sur l'axe xx', lequel arc de cercle de rayon RL comporte un centre qui est situé dans ledit plan générateur et sur un cercle de rayon RI, lequel cercle de rayon RI est centré sur ledit axe xx' et il est positionné dans un plan perpendiculaire audit axe xx'.

Le rayon RI a une valeur qui est établie en fonction du diamètre extérieur Ae de la préforme 11 ; cette valeur est donnée par la relation 0,05x(Ae) < RI < 0,1x(Ae), et, de préférence, ledit rayon RI du cercle sur lequel se déplace le centre Y de l'arc de cercle de rayon RL, a une valeur qui est de l'ordre de 0,07x(Ae).

## Revendications

1. Préforme comprenant, centrés sur un même axe xx' : - un col (5), - un corps (12) cylindrique et - un fond (13) fermé, de forme sphéroïdale, laquelle préforme se définit par rapport aux dimensions d'un modèle préétabli de bouteille (1) qui comprend : un fond (3), un corps (2), et un col (5), lequel col dudit modèle de bouteille (1) étant identique au col de ladite préforme (11),
lequel corps (12) cylindrique de cette préforme (11) comprend - un diamètre (Ae) extérieur, - un diamètre (Am) moyen pris au niveau de la fibre neutre de la paroi dudit corps (12) cylindre et dudit fond (13), et - un diamètre (K) intérieur, et,
ledit corps (12) cylindrique ainsi que ledit fond (13) sphérique de cette préforme (11) comportent des demi-longueurs (L3) et (L4) qui se lisent sur la fibre neutre de leur paroi : - une demi-longueur (L3) qui s'étend depuis la jonction (4) entre ledit col (5) et ledit corps (12) cylindrique jusqu'au niveau du centre dudit fond (13) et en particulier le point (On) dudit fond (13) qui est situé à l'intersection de ladite fibre neutre et dudit axe xx', et - une demi-longueur (L4) qui s'étend dudit centre (On) jusqu'à un point (NP) qui se situe au niveau de la jonction entre ledit corps (12) cylindrique et ledit fond (13) de ladite préforme (11),
lequel diamètre (Am) de ladite préforme (11) est déterminé en appliquant, à la valeur du diamètre (Ab) maxi du corps (2) dudit modèle préétabli de bouteille (1), un taux de réduction choisi parmi des valeurs qui vont de 3,7 à 4,5, du fait de la bi-orientation ;
laquelle demi-longueur (L3) est déterminée à partir de la demi-longueur (L1) dudit modèle de bouteille (1) en appliquant à la valeur de cette demi-longueur (L1) un taux de réduction lié également à la bi-orientation, qui est choisi parmi des valeurs allant de 2,8 à 3,5 et,
laquelle demi-longueur (L4) correspond à la demi-longueur (L3) multipliée par deux fois la valeur du rapport entre la demi-longueur (L2) dudit modèle de bouteille (1) et la demi-longueur (L1) de son assise (8), en d'autres termes : (L4)= 2x(L3)x(L2/L1), laquelle demi-longueur (L2) de l'assise (8) correspond au rayon moyen de l'assise (8) du fond (3) de ladite bouteille (1),
et, partant de la position du point (NP) qui est déterminée grâce à (L4):
- le contour externe de ladite préforme (11) entre le point (NP) et le point (OP) central externe du fond (13) qui est disposé sur l'axe xx', se définit, à partir de ce point (OP), lequel point OP se situe à une distance dudit point (On) qui correspond à la moitié de l'épaisseur (C) dudit fond (13) de ladite préforme (11) et dont la valeur est en relation avec l'épaisseur (B) de la paroi du corps (12) cylindrique de ladite préforme (11), prise du côté de son col (5),
lequel contour externe de ladite préforme (11) comporte :
. partant dudit point (OP) central, une calotte (16) sphérique qui est générée par un arc de cercle dont le centre (P) se situe sur l'axe xx', à une distance dudit point (OP) central qui correspond à un rayon (RE) dont la valeur est en relation avec le diamètre (Ae), externe de ladite préforme (11), et,
. partant du point (NP), une surface (17) tronconique qui commence au niveau dudit point (NP) et qui s'étend vers ladite calotte (16) sphérique, et dont le sommet se situe sur ledit axe xx', au-delà dudit point (OP) central, à l'extérieur dudit fond (13) de ladite préforme (11), laquelle surface (17) tronconique fait un demi-angle (M) au sommet qui est choisi pour permettre à ladite surface (17) tronconique d'être sécante avec ladite calotte (16) sphérique générée par l'arc de cercle de rayon (RE) et,
toujours pour ce contour externe de ladite préforme (11), la jonction entre ladite calotte (16) sphérique de rayon (RE) et ladite surface (17) tronconique est constituée d'un anneau (18) torique généré par un arc de cercle de rayon (RG), et la surface dudit anneau (18) torique est tangente à ladite calotte (16) sphérique et à ladite surface (17) tronconique, et ledit rayon (RG) est en relation avec le diamètre (Ae) extérieur de ladite préforme (11), et,
- le contour interne dudit fond (13) de ladite préforme (11) s'étend à partir de l'extrémité de l'enveloppe de la cavité (15) interne pseudo-cylindrique du corps (12) de ladite préforme jusqu'au point central S situé sur l'axe xx', lequel point central S est positionné à une distance (C) dudit point (OP) central mesurée sur ledit axe xx', dont la valeur est en relation avec l'épaisseur B de la paroi dudit corps (12) de ladite préforme (11), lequel contour interne dudit fond (13) se définit de la façon suivante :
. partant dudit point (S), ledit contour interne est généré par un arc de cercle de rayon (RH) dont le centre, positionné sur ledit axe xx', se situe au-delà du fond (13), à l'extérieur de ladite préforme (11), de façon à former une partie centrale bombée en forme de dôme (23) sphérique, lequel rayon (RH) est en relation avec le diamètre (Ae) extérieur de la préforme, et,
. partant d'un point (T) qui se situe à l'extrémité de l'enveloppe de ladite cavité (15) interne pseudo-cylindrique du corps (12) de ladite préforme (11), ledit contour interne comprend une surface (24) sphérique générée par un arc de cercle de rayon (RK) dont la longueur est égale au demi-diamètre (K) intérieur de ladite préforme (11) et le centre (V) de cet arc de cercle de rayon (RK) est disposé sur l'axe xx' ; ledit point T se situe au même niveau que ledit centre (V), c'est-à-dire que sa projection sur l'axe xx' coïncide avec le centre (V), et la distance (Z) entre ce centre (V) et le point (OP) du fond (13) de ladite préforme (11) correspond à 1/2K+(C-D), c'est-à-dire au demi-diamètre (K) intérieur de ladite préforme, augmenté de l'épaisseur (C) dudit fond (13) de cette préforme, mesurée sur l'axe xx', et diminué d'une épaisseur (D) qui correspond à la différence entre le rayon (RK) et la distance qui sépare le centre (V) de l'arc de ce rayon (RK) par rapport au point (S) central, laquelle valeur de (D) est définie en fonction de l'épaisseur (B) de la paroi du corps (12) cylindrique de ladite préforme (11), et,
toujours pour ce contour intérieur dudit fond (13) de ladite préforme (11), la jonction entre, d'une part, ledit dôme (23) sphérique de rayon (RH) et, d'autre part, ladite surface (24) sphérique engendrée par l'arc de cercle de rayon (RK), est constituée d'une surface (25) annulaire torique engendrée par un arc de cercle de rayon (RL) qui se situe dans un plan générateur passant par l'axe xx' et dont le centre (Y) est situé entre ledit point (S) central et ledit point (V), dans un plan perpendiculaire audit axe xx', lequel centre (Y) est disposé sur un cercle centré sur ledit axe xx' et dont le rayon (RI) a une valeur établie en fonction du diamètre (Ae) extérieur de ladite préforme (11), et,
tant pour le contour interne que pour le contour externe dudit fond (13) de ladite préforme (11), les valeurs de (RE), (M), (RG), (RH), (RK), (RL), (D), (RI), et (C) sont déterminées de la façon suivante :
- pour (RE) : 0,5.Ae < RE < 0,7.Ae,
- pour (M) : 5° < M < 20°,
- pour (RG) : 0,25.Ae < RG < 0,5.Ae,
- pour (RH) : 0,7.Ae < RH < 1,3.Ae,
- pour (RK) : RK = ½K,
- pour (RL) : 0,6 . RK < RL < RK,
- pour (D) : 0,2.C < D < 0,6.C,
- et pour (RI) : 0,05.Ae < RI < 0,1.Ae,
où :
- (Ae) est le diamètre externe du corps de ladite préforme (11) ;
- (B) correspond à l'épaisseur de la paroi du corps (12) de ladite préforme (11) au début de sa partie cylindrique ;
- (C) correspond à l'épaisseur de la paroi de ladite préforme (11) au niveau de son fond (13), sur son axe xx' avec, pour (C) : B < C < 1,1x(B) ;
- (K) est le diamètre interne de la cavité (15) pseudo-cylindrique du corps (12) cylindrique, au niveau du fond (13) de ladite préforme (11).

2. Préforme selon la revendication 1, **caractérisée en ce que**, pour le contour externe de son fond (13), la jonction entre l'enveloppe externe du corps (12) cylindrique et l'enveloppe (17) tronconique, au niveau du point (N), se présente sous la forme d'un arrondi (20) dont le rayon (RF) est du même ordre que le rayon (RE) et, de préférence, égal à 1/2x(Ae).

3. Préforme selon la revendication 1,
**caractérisée en ce que** le rayon (RE) de la calotte (16) sphérique du contour extérieur, est de l'ordre de 0,53x(Ae).

4. Préforme selon la revendication 1,
**caractérisée en ce que** le demi-angle (M) au sommet de la surface (17) tronconique du contour extérieur, est de l'ordre de 10°.

5. Préforme selon la revendication 1,
**caractérisée en ce que** le rayon (RG) de l'anneau (18) torique de son contour extérieur, qui s'étend entre la surface (16) sphérique et l'enveloppe (17) tronconique, est de l'ordre de 0,32x(Ae).

6. Préforme selon la revendication 1,
**caractérisée en ce que** le rayon (RH) du dôme (23) sphérique central de son contour interne est sensiblement égal à 1/2x(Ae), c'est-à-dire à la moitié du diamètre extérieure (Ae) du corps (12) cylindrique.

7. Préforme selon la revendication 1,
**caractérisée en ce que** le rayon (RL) de la surface (25) annulaire torique de son contour interne, qui fait la jonction entre, d'une part, la surface (24) sphérique et, d'autre part, le dôme (23) sphérique central, est de l'ordre de 0,8x(K/2).

8. Préforme selon la revendication 1,
**caractérisée en ce que** le rayon (RI) du cercle parcouru par le centre de la surface (25) annulaire torique, a une valeur qui est de l'ordre de 0,07x(Ae).

9. Préforme selon la revendication 1,
**caractérisée en ce que** l'épaisseur (D) de construction de sa paroi de fond (13), sur son axe xx', est de l'ordre de 0,41x(C).

10. Préforme selon la revendication 1,
**caractérisée en ce que** l'épaisseur (C) de la paroi de son fond (13), sur l'axe xx', est de l'ordre de 1,02x(B).

## Patentansprüche

1. Vorform, umfassend, auf ein und derselben Achse xx' zentriert: - einen Hals (5), - einen zylindrischen Körper (12) und einen geschlossenen Boden (13) mit sphäroidischer Form, wobei sich die Vorform in Bezug auf die Abmessungen eines vorgefertigten Flaschenmodells (1) definiert, welches Folgendes umfasst: einen Boden (3), einen Körper (2) und einen Hals (5), wobei der Hals des Flaschenmodells (1) mit dem Hals der Vorform (11) identisch ist,
wobei der zylindrische Körper (12) dieser Vorform (11) Folgendes umfasst: - einen Außendurchmesser (Ae), - einen Mittendurchmesser (Am), der in Höhe der neutralen Faser der Wand des zylindrischen Körpers (12) und des Bodens (13) gemessen wird, und - einen Innendurchmesser (K), und
wobei der zylindrische Körper (12) sowie der kugelförmige Boden (13) dieser Vorform (11) Halblängen (L3) und (L4) aufweisen, die auf der neutralen Faser ihrer Wand ablesbar sind: - eine Halblänge (L3), die sich von der Verbindung (4) zwischen dem Hals (5) und dem zylindrischen Körper (12) bis in Höhe des Mittelpunktes des Bodens (13) und insbesondere des Punktes (On) des Bodens (13), der sich am Schnittpunkt der neutralen Faser und der Achse xx' befindet, erstreckt, und - eine Halblänge (L4), die sich von dem Mittelpunkt (On) bis zu einem Punkt (NP), der sich in Höhe der Verbindung zwischen dem zylindrischen Körper (12) und dem Boden (13) der Vorform (11) befindet, erstreckt,
wobei der Durchmesser (Am) der Vorform (11) bestimmt wird, indem aufgrund der Bi-Orientiemng auf den Wert des maximalen Durchmessers (Ab) des Körpers (2) des vorgefertigten Flaschenmodells (1) eine Reduktionsrate, die aus den Werten von 3,7 bis 4,5 ausgewählt ist, angewandt wird;
wobei die Halblänge (L3) anhand der Halblänge (L1) des Flaschenmodells (1) bestimmt wird, indem auf den Wert dieser Halblänge (L1) eine ebenfalls mit der Bi-Orientierung verbundene Reduktionsrate, die aus Werten von 2,8 bis 3,5 ausgewählt ist, angewandt wird, und
wobei die Halblänge (L4) der Halblänge (L3) multipliziert mit dem doppelten Wert des Verhältnisses zwischen der Halblänge (L2) des Flaschenmodells (1) und der Halblänge (L1) seiner Auflagefläche (8) entspricht, anders formuliert: (L4) = 2 x (L3) x (L2/L1), wobei die Halblänge (L2) der Auflagefläche (8) dem mittleren Radius der Auflagefläche (8) des Bodens (3) der Flasche (1) entspricht,
und wobei, ausgehend von der Position des Punktes (NP), die mit Hilfe von (L4) bestimmt wird:
- sich die Außenkontur der Vorform (11) zwischen dem Punkt (NP) und dem äußeren mittleren Punkt (OP) des Bodens (13), der auf der Achse xx' angeordnet ist, ausgehend von diesem Punkt (OP) definiert, wobei sich der Punkt OP in einem Abstand zum Punkt (On) befindet, welcher der Hälfte der Stärke (C) des Bodens (13) der Vorform (11) entspricht und dessen Wert im Verhältnis zur Stärke (B) der Wand des zylindrischen Körpers (12) der Vorform (11), gemessen auf der Seite ihres Halses (5), steht,
wobei die Außenkontur der Vorform (11) Folgendes aufweist:
• ausgehend vom mittleren Punkt (OP) eine Kugelkalotte (16), die durch einen Kreisbogen erzeugt wird, dessen Mittelpunkt (P) sich auf der Achse xx' in einem Abstand zum mittleren Punkt (OP), welcher einem Radius (RE) entspricht, dessen Wert im Verhältnis zum Außendurchmesser (Ae) der Vorform (11) steht, befindet, und
• ausgehend vom Punkt (NP) eine kegelstumpfförmige Fläche (17), die in Höhe des Punktes (NP) beginnt und sich in Richtung der Kugelkalotte (16) erstreckt und deren Spitze sich auf der Achse xx' jenseits des zentralen Punktes (OP) außerhalb des Bodens (13) der Vorform (11) befindet, wobei die kegelstumpfförmige Fläche (17) einen halben Öffnungswinkel (M) bildet, der so gewählt ist, dass die kegelstumpfförmige Fläche (17) die durch den Kreisbogen mit Radius (RE) erzeugte Kugelkalotte (16) schneiden kann, und
wobei, noch immer in Bezug auf diese Außenkontur der Vorform (11), die Verbindung zwischen der Kugelkalotte (16) mit Radius (RE) und der kegelstumpfförmigen Fläche (17) aus einem durch einen Kreisbogen mit Radius (RG) erzeugten O-Ring (18) ausgebildet ist und die Fläche des O-Ringes (18) die Kugelkalotte (16) und die kegelstumpfförmige Fläche (17) tangiert und der Radius (RG) im Verhältnis zum Außendurchmesser (Ae) der Vorform (11) steht, und
- wobei sich die Innenkontur des Bodens (13) der Vorform (11) vom Ende des Mantels des pseudozylindrischen inneren Hohlraums (15) des Körpers (12) der Vorform bis zum mittleren Punkt S, der sich auf der Achse xx' befindet, erstreckt, wobei der mittlere Punkt S in einem auf der Achse xx' gemessenen Abstand (C) zum zentralen Punkt (OP), dessen Wert im Verhältnis zur Stärke B der Wand des Körpers (12) der Vorform (11) steht, positioniert ist, wobei sich die Innenkontur des Bodens (13) folgendermaßen definiert:
• ausgehend vom Punkt (S) wird die Innenkontur durch einen Kreisbogen mit Radius (RH) erzeugt, dessen Mittelpunkt, der auf der Achse xx' positioniert ist, sich jenseits des Bodens (13) außerhalb der Vorform (11) befindet, um einen mittleren gewölbten Bereich in Form einer kugelförmigen Kuppel (23) zu bilden, wobei der Radius (RH) im Verhältnis zum Außendurchmesser (Ae) der Vorform steht, und
• ausgehend von einem Punkt (T), der sich am Ende des Mantels des pseudozylindrischen inneren Hohlraums (15) des Körpers (12) der Vorform (11) befindet, umfasst die Innenkontur eine kugelförmige Oberfläche (24), die durch einen Kreisbogen mit Radius (RK) erzeugt wird, dessen Länge gleich dem halben Innendurchmesser (K) der Vorform (11) ist, und wobei der Mittelpunkt (V) dieses Kreisbogens mit Radius (RK) auf der Achse xx' angeordnet ist; wobei sich der Punkt T in gleicher Höhe wie der Mittelpunkt (V) befindet, d. h. dass seine Projektion auf die Achse xx' mit dem Mittelpunkt (V) zusammenfällt, und wobei der Abstand (Z) zwischen diesem Mittelpunkt (V) und dem Punkt (OP) des Bodens (13) der Vorform (11) 1/2K + (C - D) entspricht, d. h. dem halben Innendurchmesser (K) der Vorform plus der Stärke (C) des Bodens (13) dieser Vorform, gemessen auf der Achse xx', und minus einer Stärke (D), die der Differenz zwischen dem Radius (RK) und dem Abstand entspricht, welcher den Mittelpunkt (V) des Bogens mit diesem Radius (RK) in Bezug auf den zentralen Punkt (S) trennt, wobei der Wert von (D) in Abhängigkeit von der Stärke (B) der Wand des zylindrischen Körpers (12) der Vorform (11) definiert wird, und
wobei, noch immer in Bezug auf diese Innenkontur des Bodens (13) der Vorform (11), die Verbindung zwischen der kugelförmigen Kuppel (23) mit Radius (RH) einerseits und der durch den Kreisbogen mit Radius (RK) gebildeten kugelförmigen Oberfläche (24) andererseits aus einer ringförmigen torischen Fläche (25) ausgebildet ist, die durch einen Kreisbogen mit Radius (RL) gebildet ist, der sich in einer Erzeugerebene befindet, welche durch die Achse xx' verläuft und deren Mittelpunkt (Y) sich zwischen dem mittleren Punkt (S) und dem Punkt (V) in einer zur Achse xx' senkrechten Ebene befindet, wobei der Mittelpunkt (Y) auf einem um die Achse xx' zentrierten Kreis angeordnet ist und dessen Radius (RI) einen Wert besitzt, der in Abhängigkeit vom Außendurchmesser (Ae) der Vorform (11) bestimmt wird, und
wobei, sowohl für die Innenkontur als auch für die Außenkontur des Bodens (13) der Vorform (11), die Werte von (RE), (M), (RG), (RH), (RK), (RL), (D), (RI) und (C) folgendermaßen bestimmt werden:
- für (RE): 0,5 · Ae < RE < 0,7 · Ae,
- für (M): 5° < M < 20°,
- für (RG): 0,25 · Ae < RG < 0,5 · Ae,
- für (RH): 0,7 · Ae < RH < 1,3 · Ae,
- für (RK): RK = ½ K,
- für (RL): 0,6 · RK < RL < RK,
- für (D): 0,2 · C < D < 0,6 · C,
- und für (RI): 0,05 · Ae < RI < 0,1 · Ae,
wobei:
- (Ae) der Außendurchmesser des Körpers der Vorform (11) ist;
- (B) der Stärke der Wand des Körpers (12) der Vorform (11) am Beginn ihres zylinderförmigen Bereichs entspricht;
- (C) der Stärke der Wand der Vorform (11) in Höhe ihres Bodens (13) auf ihrer Achse xx' entspricht, wobei für (C) gilt: B < C < 1,1 x (B);
- (K) der Innendurchmesser des pseudozylindrischen Hohlraums (15) des zylindrischen Körpers (12) in Höhe des Bodens (13) der Vorform (11) ist.

2. Vorform nach Anspruch 1, **dadurch gekennzeichnet, dass** bei der Außenkontur ihres Bodens (13) die Verbindung zwischen dem äußeren Mantel des zylindrischen Körpers (12) und dem kegelstumpfförmigen Mantel (17) in Höhe des Punktes (N) die Form einer Rundung (20) aufweist, deren Radius (RF) etwa dem Radius (RE) entspricht und vorzugsweise gleich 1/2 x (Ae) ist.

3. Vorform nach Anspruch 1, **dadurch gekennzeichnet, dass** der Radius (RE) der Kugelkalotte (16) der Außenkontur etwa 0,53 x (Ae) entspricht.

4. Vorform nach Anspruch 1, **dadurch gekennzeichnet, dass** der halbe Öffnungswinkel (M) der kegelstumpfförmigen Fläche (17) der Außenkontur etwa 10° entspricht.

5. Vorform nach Anspruch 1, **dadurch gekennzeichnet, dass** der Radius (RG) des O-Rings (18) ihrer Außenkontur, der sich zwischen der kugelförmigen Fläche (16) und dem kegelstumpfförmigen Mantel (17) erstreckt, etwa 0,32 x (Ae) entspricht.

6. Vorform nach Anspruch 1, **dadurch gekennzeichnet, dass** der Radius (RH) der mittleren kugelförmigen Kuppel (23) ihrer Innenkontur im Wesentlichen gleich 1/2 x (Ae), d. h. gleich der Hälfte des Außendurchmessers (Ae) des zylindrischen Körpers (12), ist.

7. Vorform nach Anspruch 1, **dadurch gekennzeichnet, dass** der Radius (RL) der ringförmigen torischen Fläche (25) ihrer Innenkontur, welche die Verbindung zwischen der kugelförmigen Oberfläche (24) einerseits und der zentralen kugelförmigen Kuppel (23) andererseits bildet, etwa 0,8 x (K/2) entspricht.

8. Vorform nach Anspruch 1, **dadurch gekennzeichnet, dass** der Radius (RI) des Kreises, der durch den Mittelpunkt der ringförmigen torischen Fläche (25) durchlaufen wird, einen Wert besitzt, der etwa 0,07 x (Ae) entspricht.

9. Vorform nach Anspruch 1, **dadurch gekennzeichnet, dass** die Konstruktionsstärke (D) ihrer Bodenwand (13) auf ihrer Achse xx' etwa 0,41 x (C) entspricht.

10. Vorform nach Anspruch 1, **dadurch gekennzeichnet, dass** die Stärke (C) der Wand ihres Bodens (13) auf der Achse xx' etwa 1,02 x (B) entspricht.

## Claims

1. Preform comprising, centered on a single axis xx':
- a neck (5), - a cylindrical body (12), and - an enclosed bottom (13) that is spheroidal in shape, said preform being defined relative to the dimensions of a pre-established bottle (1) model which comprises: a bottom (3), a body (2), and a neck (5), said neck of said bottle (1) model being identical to the neck of said preform (11),
said cylindrical body (12) of this preform (11) comprises - an outside diameter (Ae), - a mean diameter (Am) measured at the neutral axis of the wall of said cylindrical body (12) and of said bottom (13), and - an inside diameter (K), and
said cylindrical body (12) as well as said spherical bottom (13) of this preform (11) comprise half-lengths (L3) and (L4) which are measured along the neutral axis of their wall: - a half-length (L3) which extends from the connection (4) between said neck (5) and said cylindrical body (12) to the center of said bottom (13) and in particular to point (On) of said bottom (13) which is located at the intersection of said neutral axis and of said axis xx', and - a half-length (L4) which extends from said center (On) to a point (NP) which is located at the connection between said cylindrical body (12) and said bottom (13) of said preform (11),
said diameter (Am) of said preform (11) is determined by applying, to the value of the maximum diameter (Ab) of the body (2) of said pre-established bottle (1) model, a reduction ratio chosen from among values which range from 3.7 to 4.5, due to the biaxial orientation;
said half-length (L3) is determined from half-length (L1) of said bottle (1) model by applying to the value of half-length (L1) a reduction ratio that is also related to the biaxial orientation and which is chosen from among values ranging from 2.8 to 3.5, and
said half-length (L4) corresponds to half-length (L3) multiplied by twice the value of the ratio between half-length (L2) of said bottle (1) model and half-length (L1) of its base (8), in other words: (L4) = 2x(L3)x(L2/L1), and said half-length (L2) of the base (8) corresponds to the mean radius of the base (8) of the bottom (3) of said bottle (1),
and, starting from the position of point (NP), which is determined from (L4):
- the external contour of said preform (11) between point (NP) and the external central point (OP) of the bottom (13), which is located on axis xx', is defined starting from this point (OP), said point (OP) being located at a distance from said point (On) which corresponds to half the thickness (C) of said bottom (13) of said preform (11) and its value being in relation to the thickness (B) of the wall of the cylindrical body (12) of said preform (11), measured near its neck (5),
said external contour of said preform (11) comprising:
. starting from said central point (OP), a spherical cap (16) which is generated by an arc of a circle having its center (P) located on axis xx', at a distance from said central point (OP) which corresponds to a radius (RE) for which the value is in relation to the outside diameter (Ae) of said preform (11), and
. starting from point (NP), a tapered surface (17) which starts at said point (NP) and which extends towards said spherical cap (16), and which has its tip on said axis xx', beyond said central point (OP) and external to said bottom (13) of said preform (11), said tapered surface (17) forming a half-angle (M) at the top which is chosen to allow said tapered surface (17) to be secant with said spherical cap (16) generated by an arc of a circle of radius (RE), and
still for this external contour of said preform (11), the connection between said spherical cap (16) of radius (RE) and said tapered surface (17) consists of a toroidal ring (18) generated by an arc of a circle of radius (RG), and the surface of said toroidal ring (18) is tangent to said spherical cap (16) and to said tapered surface (17), and said radius (RG) is in relation to the outside diameter (Ae) of said preform (11), and
- the internal contour of said bottom (13) of said preform (11) extends from the end of the envelope of the pseudo-cylindrical inner cavity (15) of the body (12) of said preform to the central point (S) located on axis xx', said central point (S) being positioned at a distance (C) from said central point (OP), measured on said axis xx', of which the value is in relation to the thickness (B) of the wall of said body (12) of said preform (11), said internal contour of said bottom (13) being defined in the following manner:
. starting from said point (S), said internal contour is generated by an arc of a circle of radius (RH) of which the center, positioned on said axis xx', is located beyond the bottom (13), externally to said preform (11), so as to form a central rounded portion in the shape of a spherical dome (23), said radius (RH) being in relation to the outside diameter (Ae) of the preform, and
. starting from a point (T) which is located at the end of the envelope of said pseudo-cylindrical inner cavity (15) of the body (12) of said preform (11), said internal contour comprising a spherical surface (24) generated by an arc of a circle of radius (RK) of which the length is equal to half the inside diameter (K) of said preform (11) and the center (V) of this arc of a circle of radius (RK) is located on axis xx'; said point (T) is located at the same level as said center (V), meaning that its projection onto axis xx' coincides with the center (V), and the distance (Z) between this center (V) and point (OP) of the bottom (13) of said preform (11) corresponds to 1/2K+(C-D), meaning to half the inside diameter (K) of said preform, plus the thickness (C) of said bottom (13) of said preform, measured along axis xx', and minus a thickness (D) which corresponds to the difference between the radius (RK) and the distance separating the center (V) of the arc of this radius (RK) relative to the central point (S), said value of (D) being defined as a function of the thickness (B) of the wall of the cylindrical body (12) of said preform (11), and
still for this internal contour of said bottom (13) of said preform (11), the connection between said spherical dome (23) of radius (RH) and said spherical surface (24) created by the arc of a circle of radius (RK), consists of a toroidal annular surface (25) created by an arc of a circle of radius (RL) which is located in a generating plane passing through axis xx' and having its center (Y) located between said central point (S) and said point (V), in a plane perpendicular to said axis xx', said center (Y) being positioned on a circle centered on said axis xx' and having a radius (RI) for which the value is established as a function of the outside diameter (Ae) of said preform (11), and
both for the internal contour and for the external contour of said bottom (13) of said preform (11), the values of (RE), (M), (RG), (RH), (RK), (RL), (D), (RI), and (C) are determined in the following manner:
- for (RE): 0.5xAe < RE < 0.7xAe,
- for (M) : 5° < M < 20°,
- for (RG): 0.25xAe < RG < 0.5xAe,
- for (RH): 0.7xAe < RH < 1.3xAe,
- for (RK) : RK = ½K,
- for (RL): 0.6xRK < RL < RK,
- for (D): 0.2xC < D < 0.6xC,
- and for (RI): 0.05xAe < RI < 0.1xAe,
where:
- (Ae) is the outside diameter of the body of said preform (11);
- (B) corresponds to the thickness of the wall of the body (12) of said preform (11) at the start of its cylindrical portion;
- (C) corresponds to the thickness of the wall of said preform (11) at its bottom (13), along its axis xx', with, for (C): B < C < 1.1x(B);
- (K) is the inside diameter of the pseudo-cylindrical cavity (15) of the cylindrical body (12), at the bottom (13) of said preform (11).

2. Preform according to claim 1, **characterized in that**, for the external contour of its bottom (13), the connection between the outside envelope of the cylindrical body (12) and the tapered envelope (17), at point (N), is in the form of a rounded surface (20) of a radius (RF) that is on the same order as radius (RE) and, preferably, is equal to 1/2x(Ae).

3. Preform according to claim 1, **characterized in that** the radius (RE) of the spherical cap (16) of the external contour is on the order of 0.53x(Ae).

4. Preform according to claim 1, **characterized in that** the half-angle (M) at the top of the tapered surface (17) of the external contour is on the order of 10°.

5. Preform according to claim 1, **characterized in that** the radius (RG) of the toroidal ring (18) of its external contour, which extends between the spherical surface (16) and the tapered envelope (17), is on the order of 0.32x(Ae).

6. Preform according to claim 1, **characterized in that** the radius (RH) of the central spherical dome (23) of its internal contour is substantially equal to 1/2x(Ae), meaning to half the outside diameter (Ae) of the cylindrical body (12).

7. Preform according to claim 1, **characterized in that** the radius (RL) of the toroidal annular surface (25) of its internal contour, which acts as the connection between the spherical surface (24) and the central spherical dome (23), is on the order of 0.8x(K/2).

8. Preform according to claim 1, **characterized in that** the radius (RI) of the circle which is traced by the center of the toroidal annular surface (25) has a value which is on the order of 0.07x(Ae).

9. Preform according to claim 1, **characterized in that** the construction thickness (D) of the wall of its bottom (13), along its axis xx', is on the order of 0.41x(C).

10. Preform according to claim 1, **characterized in that** the thickness (C) of the wall of its bottom (13), along axis xx', is on the order of 1.02x(B).
